# EUROPÄISCHE PATENTANMELDUNG

(11) **EP 3 770 559 A1**
(43) Veröffentlichungstag der Anmeldung: **27.01.2021**
(21) Anmeldenummer: 19187707.5
(22) Anmeldetag: 23.07.2019
(51) Int. Cl.: G01D 5/244, G01D 5/245

(54) **BESTIMMUNG DER RELATIVPOSITION ZWEIER ZUEINANDER BEWEGTER OBJEKTE**

(71) Anmelder: SICK AG, 79183 Waldkirch (DE)
(72) Erfinder: Moddemann, Jörg, 79132 Emmendingen (DE); Merkler, Fabian, 79211 Denzlingen (DE)

(57) **Zusammenfassung**

Es wird eine Gebervorrichtung (10) zur Bestimmung einer Position eines ersten Objekts relativ zu einem gegenüber dem ersten Objekt beweglichen zweiten Objekt angegeben, die eine mit dem ersten Objekt verbundene Maßverkörperung (12) und eine mit dem zweiten Objekt verbundene Abtasteinheit (14) zur Erzeugung eines ersten, zweiten und dritten Positionssignals (A, B, C) mit gegenseitigem Phasenversatz sowie eine Steuer- und Auswertungseinheit (18) aufweist, die dafür ausgebildet ist, die Position aus den Positionssignalen (A, B, C) zu bestimmen. Dabei ist die Gebervorrichtung (10) sicher ausgebildet, indem die Steuer- und Auswertungseinheit (18) die Positionssignale (A, B, C) prüft.

## Beschreibung

Die Erfindung betrifft eine Gebervorrichtung und ein Verfahren zur Bestimmung einer Position eines ersten Objekts relativ zu einem gegenüber dem ersten Objekt beweglichen zweiten Objekt nach dem Oberbegriff von Anspruch 1 beziehungsweise 15.

Positionsgeber oder kurz Geber sind Sensoren, die eine Position eines Objekts oder zumindest ein Signal ausgeben, aus dem sich die Position des Objekts rekonstruieren lässt. Man unterscheidet lineare und rotatorische Systeme. Ein Lineargeber bestimmt als Position die Verschiebung auf einer Achse. Ein Drehgeber, Drehwinkelsensor oder Encoder dient dagegen der Erfassung eines Drehwinkels oder einer Winkelstellung beispielsweise einer Welle eines Antriebselements. Dabei wird jeweils eine Maßverkörperung abgetastet, die längs der linearen Achse beziehungsweise an der Welle mitdrehend angebracht ist. Die Maßverkörperung erzeugt über die Relativbewegung eine Intensitätsmodulation in einem Abtastsensor, die als Positionssignal genutzt wird. Oft gibt es mehr als eine abgetastete Codespur. So sind Sin/Cos-Geber verbreitet, die zwei analoge Ausgangssignale mit einem positionsabhängigen sinusförmigen beziehungsweise cosinusförmigen Verlauf zur Verfügung stellen. Die Phase und die Anzahl Perioden dieser Signale repräsentieren jeweils mit einem 90°-Versatz die gesuchte Position.

Für die Positionsbestimmung in solchen Gebern werden verschiedenste Technologien eingesetzt. Optische Drehgeber verwenden eine Codescheibe mit als Code dienenden Öffnungen oder Reflexmarken, die das Signal eines Lichtsenders modulieren, so dass ein in Transmission oder Reflexion angeordneter Lichtempfänger Positionssignale empfängt. Das Prinzip ist auch auf Lineargeber übertragbar. Bei einem magnetischen Geber wird beispielsweise die Veränderung des Magnetfelds bei Vorbeibewegen von codierenden Permanentmagneten mit einem Hallsensor detektiert. Weitere bekannte Systeme nutzen Maßverkörperungen und Abtastungen, die beispielsweise induktiv, kapazitiv oder nach noch anderen Modulations- und Abtastprinzipien arbeiten.

Es besteht eine steigende Nachfrage nach Gebern, die besondere Sicherheitsanforderungen erfüllen. In der Sicherheitstechnik werden strenge Bedingungen an die Zuverlässigkeit und Ausfallsicherheit von Sensoren gestellt, um in bestimmten Sicherheitsklassen oder Sicherheitsniveaus zugelassen zu werden. Einige Beispiele aus einschlägigen Sicherheitsnormen sind SIL (Safety Integrity Level) gemäß EN 61508, SILCL (SIL claim) der EN 62061 oder PL (Performance Level) der ISO 13849-1. Typische Sicherheitsfunktionen sind Notausschaltungen, Abschalten überhitzter Geräte oder die Überwachung gefährlicher Bewegungen. Bei Geräten, die diese Anforderungen erfüllen sollen, muss gewährleistet sein, dass auch im Fehlerfall die weitere Funktion erhalten bleibt oder zumindest der Fehler sicher aufgedeckt wird, um eine Sicherheitsmaßnahme wie eine Notabschaltung einzuleiten.

Eine Möglichkeit, derartigen Sicherheitsnormen gerecht zu werden, ist der Einsatz von mehr als einem Sensorsystem in dem Geber (Redundanz), wobei diese mehreren Sensorsysteme idealerweise nicht das gleiche Messprinzip verwenden (Diversität). Dann ist trotz eines Ausfalls zumindest noch ein Sensorsystem verfügbar, und durch Vergleich der beiden Sensorsysteme kann Fehlfunktion erkannt werden. Das ist aber eine aufwändige Lösung. Nicht nur muss die redundante Hardware zur Verfügung gestellt werden, die entsprechenden Bauraum beansprucht, sondern es ist auch noch deren Verknüpfung zu leisten. Beispielsweise im Falle eines redundanten A/B-Gebers mit um 90° zueinander versetzten Rechtecksignalen sind insgesamt vier Positionssignale zu erzeugen, zu übertragen und auszuwerten.

Ein anderer Ansatz ist ein nur einfach vorhandenes Sensorsystem, dessen Sensordaten dann aber in geforderten Zyklen getestet oder plausibilisiert werden, um Fehler aufzudecken. Die EP 2 746 732 A1 beispielsweise offenbart eine Sin/Cos-Gebervorrichtung mit einer Überwachung der Amplituden beziehungsweise Vektorlängen. Obwohl dort eine besonders vorteilhafte Umsetzung beschrieben ist, bleibt die erforderliche Überwachung relativ aufwändig. Die DE 10 2006 048 353 A1 beschreibt einen redundant ausgewerteten Winkelgeber mit zwei Codespuren. Da erst die nachgelagerte Auswertung zweikanalig ist, wird hier zusätzliche Sicherheit des Winkelgebers selbst letztlich durch Plausibilisierung und nicht Redundanz gewonnen. Es ist auch bekannt, in einem Geber mehr als zwei Codespuren vorzusehen und somit mehr als zwei Positionssignale zu gewinnen, anders als beispielsweise in einem Sin/Cos-Geber mit zwei Codespuren. Das geschieht aber nicht, um diese Geber im Sinne der genannten Normen sicher auszubilden, sondern für nicht-sichere Zwecke, wie die Vergrößerung des Eindeutigkeitsbereichs oder eine Auflösungserhöhung.

In der DE 40 15 099 A1 wird ein Messwandler mit drei Codespuren offenbart, von denen eine ein pseudozufälliges Muster und die anderen beiden um 90° gegeneinander verschobene inkrementelle Spuren sind. Mit dieser Kombination gelingt es, auch eine Bewegungsrichtung zu bestimmen und nach Stromausfall die Position rasch zu rekonstruieren.

Die DE 10 2014 103 514 B4 verwendet drei Codespuren unterschiedlicher Periodizität, um die Auflösung nach dem Noniusprinzip zu verbessern.

Aus der US 7 612 326 B2 ist ein optischer Encoder mit drei Codespuren bekannt, die zueinander um 2π/3 phasenversetzt sind. Dadurch werden drei versetzte Sinussignale gewonnen. Diese wiederum werden digitalisiert, um Pulse zu zählen. In einer Ausführungsform wird dazu ein Zustandsautomat eingesetzt, der den Zähler je nach Zustandsübergang herauf- oder herabzählt. Wenn der Zustandsautomat in seinem gegenwärtigen Zustand für die aktuellen digitalisierten Sinussignale keinen Zustandsübergang vorsieht, verharrt der Zustandsautomat in seinem Zustand und lässt den Zähler unverändert.

Es ist daher Aufgabe der Erfindung, die Verlässlichkeit eines Gebers zu verbessern.

Diese Aufgabe wird durch eine Gebervorrichtung und ein Verfahren zur Bestimmung einer Position eines ersten Objekts relativ zu einem gegenüber dem ersten Objekt beweglichen zweiten Objekt nach Anspruch 1 beziehungsweise 15 gelöst. Die Gebervorrichtung kann je nach Ausführungsform Positionen längs einer Linearbewegung oder Winkelpositionen einer Rotationsbewegung bestimmen. Eine Maßverkörperung ist mit dem einen Objekt und eine Abtasteinheit zur Erzeugung von Positionssignalen durch Abtastung der in Relativbewegung befindlichen Maßverkörperung mit dem anderen Objekt verbunden. Die Abtasteinheit erzeugt durch Abtastung der Maßverkörperung drei Positionssignale, die mit A, B und C bezeichnet werden, insbesondere durch drei Codespuren auf der Maßverkörperung und drei zugehörige Abtasteinheiten beziehungsweise eine gemeinsame Abtasteinheit mit dem Vermögen, drei Codespuren abzutasten. Eine Steuer- und Auswertungseinheit wertet die Positionssignale aus, um die Position zu bestimmen, wofür vorzugsweise, aber nicht notwendigerweise alle drei Positionssignale herangezogen werden.

Die Erfindung geht von dem Grundgedanken aus, die Gebervorrichtung durch Prüfen der Positionssignale sicher im Sinne eines geforderten Sicherheitsniveaus auszubilden. Solche Sicherheitsniveaus sind in den einschlägigen Sicherheitsnormen definiert, von denen einleitend einige als Beispiel genannt sind. Eine Überprüfung von Positionssignalen erfolgt zyklisch, auf Anforderung oder auch ereignisbezogen bei bestimmten Auslösern, die insbesondere aus den Positionssignalen selbst abgeleitet sein können. Die Überprüfung dient der im Sinne des Sicherheitsniveaus verlässlichen Fehleraufdeckung. Damit sind natürlich keine Messfehler gemeint, sondern ein Funktionsfehler, mit dem die spezifizierte Funktion der Gebervorrichtung nicht mehr gewährleistet werden kann.

Die Erfindung hat den Vorteil, dass eine sichere Gebervorrichtung für den Einsatz in sicherheitstechnischen Anwendungen entsteht. Dabei bezieht sich die Sicherheit auf die Erfassung, Auswertung und/oder Übertragung. Die Sensorik der Gebervorrichtung samt Auswertung und Überwachung der Positionssignale bleibt kostengünstig. Das betrifft die Herstell- oder Anschaffungskosten für eine vergleichsweise günstige Hardware, aber auch die Installationskosten. Denn im Gegensatz zu einem herkömmlichen redundanten A/B-Geber mit mindestens vier Positionssignalen ist die Verkabelung und Kontaktierung nur für eine geringere Signal- beziehungsweise Leitungsanzahl erforderlich. Die erfindungsgemäße Gebervorrichtung ist außerdem platzsparend.

Die Maßverkörperung weist bevorzugt drei periodische Codespuren mit gegenseitigem Phasenversatz von 120° auf. Die Codespuren haben vorzugsweise eine gleiche Periode, was dann bei zumindest zeitweise und annähernd gleichmäßiger Bewegung zu entsprechend periodischen Positionssignalen führt. Die drei Codespuren haben nach dieser Ausführungsform einen gleichmäßigen gegenseitigen Phasenversatz, teilen also eine 360°-Periode gleichmäßig untereinander auf. Vorzugsweise sind die Codespuren und damit die Positionssignale untereinander bis auf den Phasenversatz gleich. Es handelt sich bevorzugt um inkrementelle Codespuren und damit Positionssignale.

Die Positionssignale sind bevorzugt binäre Signale mit zwei Zuständen, oder es ist mindestens eine Wandlereinheit vorgesehen, um für die Prüfung der Positionssignale binäre Signale mit zwei Zuständen zu erzeugen. Die Positionssignale haben damit entweder schon originär nur zwei binäre Zustände, wie in einem Rechtecksignal, die hier mit Eins und Null bezeichnet werden, oder ein zunächst analoges Signal wird entsprechend digitalisiert. Dann ist das ursprüngliche Positionssignal beispielsweise ein Sinus, und diese analoge Information kann von der Steuer- und Auswertungseinheit durchaus für eine feinere Positionsbestimmung genutzt werden. Die Überprüfung erfolgt aber vorzugsweise nach der Digitalisierung anhand von nur zwei binären Zuständen. Es ist denkbar, dass nur einige Positionssignale digital sind oder digitalisiert werden, das sind dann bevorzugt diejenigen, mit denen die Überprüfung vorgenommen wird. In bevorzugter Ausführungsform mit gegenseitigem 120°-Phasenversatz werden die beiden binären Zustände innerhalb eines Positionssignals für jeweils eine halbe Periode oder 180° alternierend eingenommen.

Die Steuer- und Auswertungseinheit ist bevorzugt dafür ausgebildet, die Position durch Zählen von Zustandswechseln der binären Signale zu bestimmen. Das ist eine einfache Auswertungsmöglichkeit, die nur auf Flanken oder Zustandswechsel zwischen Eins und Null reagiert. Dabei wird bevorzugt ein Richtungswechsel der Bewegung bemerkt und dann die Zählrichtung umgekehrt, denn je nach Bewegungsrichtung kehrt sich die Reihenfolge der Zustandswechsel in den drei Positionssignalen um, so dass dies leicht von der Steuer- und Auswertungseinheit erkannt wird.

Die Abtasteinheit ist bevorzugt dafür ausgebildet, einen bei einer eigenen Prüfung der Positionssignale erkannten Fehler der Steuer- und Auswertungseinheit durch einen dritten Zustand anzuzeigen. Schon in das Abtasteinheit der Gebervorrichtung können integriert Plausibilisierungen durchgeführt werden, um vor allem Fehler gemeinsamer Ursache aufzudecken, die nicht in einer falschen Signalreihenfolge resultieren. Um solche Fehler an die Steuer- und Auswertungseinheit zu signalisieren, werden die betroffenen oder alle Spuren auf hochohmig geschaltet. Somit könnten mit einer Tri-State-Leitung pro Codespur drei Zustände unterschieden werden: Null, Eins und hochohmig, wobei der dritte hochohmige Zustand den Fehler signalisiert.

Die Steuer- und Auswertungseinheit ist bevorzugt dafür ausgebildet, bei der Prüfung der Positionssignale einen Fehler zu erkennen, wenn die drei Positionssignale zeitgleich denselben Zustand aufweisen. Das betrifft insbesondere den Fall, dass alle drei Positionssignale zugleich bei Null sind, was beispielsweise auf einen Kabelbruch hindeutet. Zumindest in der bevorzugten Auslegung periodischer Codespuren im 120°-Phasenversatz nehmen die drei Positionssignale auch in keinem fehlerfreien Fall zugleich den Zustand Eins ein, so dass dies ebenfalls als Fehler aufgefasst wird, etwa wegen Kurzschluss oder einer sonstigen Fehlfunktion. Es sei an dieser Stelle bemerkt, dass es zwar für die Diagnose und Wartung sehr nützlich ist, den Grund für einen Fehler zu kennen. Für die Sicherheitsbetrachtung geht es aber nur darum, das Vorliegen eines Fehlers aufzudecken, auf die Ursache oder den genauen Fehler kommt es dabei nicht an.

Die Steuer- und Auswertungseinheit ist bevorzugt dafür ausgebildet, für die Prüfung der Positionssignale eine Abfolge der von den drei Positionssignalen eingenommenen Zustände mit einer zulässigen Abfolge zu vergleichen. Bei funktionsfähigem Geber wechseln die drei Zustände der drei Positionssignale einander in einer bekannten Sequenz ab. Wenn es also mindestens einen Flanken- oder Zustandswechsel gegeben hat, oder wenn - immer unter der Annahme einer zumindest vorübergehend einigermaßen gleichmäßigen Bewegung -ein Zeitintervall vergangen ist, in dem es einen solchen Zustandswechsel geben müsste, dann sollten die drei Zustände sich in einer Weise verändert haben, die eine intakte Gebervorrichtung erwarten ließe. Andernfalls liegt ein Fehler vor.

Die Steuer- und Auswertungseinheit vergleicht die Abfolge vorzugsweise mittels eines Zustandsautomaten, wobei die Automatenzustände durch drei binäre Ziffern entsprechend den Zuständen der drei Positionssignale gebildet sind. Das ist eine einfache Implementierungsmöglichkeit, um Erwartungen an die Abfolge mit der Realität zu vergleichen. Dabei können den Automatenzuständen natürlich auch andere Namen als die drei binären Ziffern gegeben werden, es geht nur darum, sie anhand dieser Eigenschaft zu unterscheiden. Der Zustandsautomat bildet zulässige Automatenzustände und zulässige Übergänge dazwischen ab. Dabei werden Automatenzustände vorzugsweise nicht für alle denkbaren Kombinationen von drei binären Ziffern definiert, sondern nur für eine Auswahl davon, oder mehrere Kombinationen von drei binären Ziffern entsprechen demselben Automatenzustand.

Der Zustandsautomat weist bevorzugt zulässige Automatenzustände, die jeweils genaue eine Eins oder zwei Einsen als binäre Ziffern aufweisen, sowie einen Fehlerzustand auf. Es gibt damit bis zu sechs zulässige Automatenzustände, nämlich die drei Automatenzustände 100, 010, 001 mit genau einer Eins und die drei Automatenzustände 110, 101, 011 mit zwei Einsen. Der Fehlerzustand kann einige oder alle weiteren Kombinationen von drei binären Ziffern umfassen. Dabei sind auch mehrere Fehlerzustände denkbar, die dann Hinweise darauf geben können, welches Positionssignal den Fehler verursacht. Der Fehlerzustand des Zustandsautomaten bedeutet, dass die Prüfung der Positionssignale nicht erfolgreich war, es ist also ein Fehler der Gebervorrichtung erkannt. Darauf folgt dann eine angemessene sicherheitsgerichtete Reaktion, aber darüber entscheidet vorzugsweise nicht die Gebervorrichtung, die den Fehler lediglich auf sichere Weise meldet, sondern ein übergeordnetes System, an das die Gebervorrichtung angeschlossen ist. Die sicherheitsgerichtete Reaktion muss ohnehin nicht direkt mit einer Notabschaltung verbunden sein, sondern kann auch in einem Verringern von Geschwindigkeiten bestehen, beziehungsweise ein aufgedeckter Fehler kann zumindest für eine gewisse Zeit oder bis zu einer Bestätigung in der Sicherheitsanwendung toleriert werden.

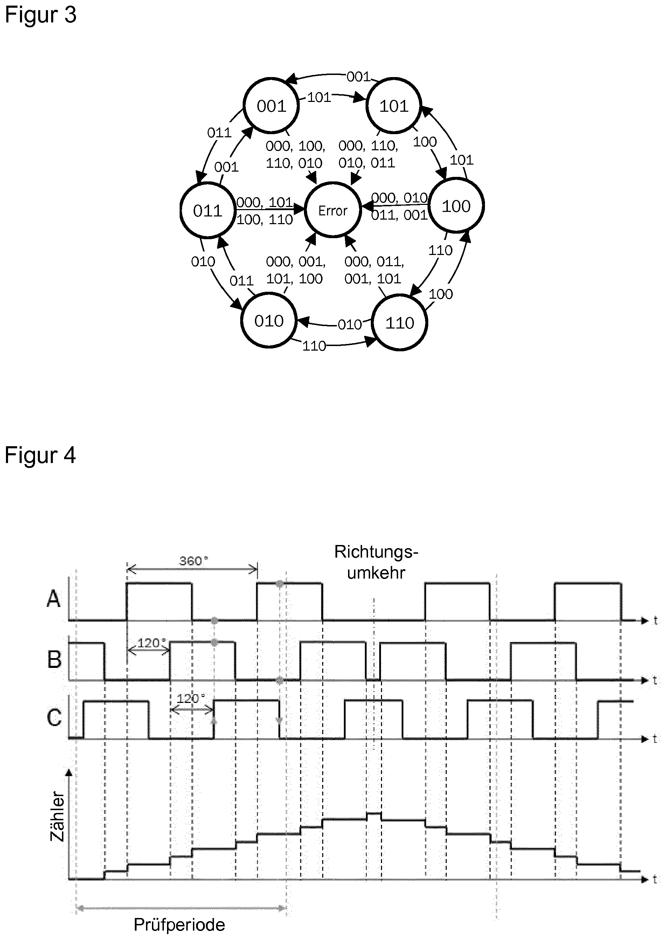

Der Zustandsautomat geht bevorzugt von einem zulässigen Automatenzustand in einen zulässigen Automatenzustand über, wenn der Automatenzustand zuerst genau eine Eins und dann zwei Einsen als binäre Ziffer aufweist oder umgekehrt, wobei eine der Einsen erhalten bleibt, und wobei insbesondere jeder andere Übergang eines Automatenzustands in den Fehlerzustand führt. Das lässt sich auch so ausdrücken, dass Übergänge mit den Zuständen 000 und 111 grundsätzlich nicht zulässig sind und dass ansonsten bei einem zulässigen Übergang genau eine binäre Ziffer ändert. Im fehlerfreien Betrieb alternieren also Automatenzustände mit einer Eins und mit zwei Einsen, wobei jeweils eine Eins festbleibt und entweder eine Eins hinzukommt oder wegfällt. Alle anderen Übergänge führen in den Fehlerzustand. Ergänzend zu diesen sprachlichen Definitionen sei auf ein beispielhaftes Automatenzustandsdiagramm gemäß Figur 3 verwiesen, bei dem die zulässigen Übergänge, die auch nur teilweise implementiert sein könnten, ringsum gezeigt sind und zahlreiche sonstige Übergänge in den zentralen Fehlerzustand führen. Der womöglich nicht sonderlich praxisrelevante Übergang 111 würde ebenfalls als Übergang in den Fehlerzustand einbezogen.

Die Betrachtungen einer Abfolge von Zuständen und eines Zustandsautomaten sind am einfachsten verständlich für binäre oder binarisierte Positionssignale mit untereinander gleicher Periode, 120° Phasenversatz und jeweils alternierenden, 180° langen Zuständen Eins und Null. Zumindest bei kleineren Abweichungen von diesen Bedingungen sind aber dieselben oder entsprechende Auswertungen und Überprüfungen möglich.

Die Steuer- und Auswertungseinheit ist bevorzugt dafür ausgebildet, nur einen Teil der Zustandsübergänge zu prüfen. Das kann eine Vorauswahl sein, die nur einen Teil der Positionssignale oder Zustände prüft, oder den Zustandsautomaten nur teilweise implementiert. Ebenfalls denkbar ist eine zufällige oder stichprobenartige Teilauswahl, die dann vorzugsweise mit hinreichender statistischer Sicherheit über die Zeit wechselt und die relevanten Szenarien abdeckt.

Die Steuer- und Auswertungseinheit ist bevorzugt dafür ausgebildet, die Position aus zwei der Positionssignale zu bestimmen und das dritte Positionssignal zum Prüfen der Positionssignale zu verwenden. Wie in der gesamten Beschreibung sind die Positionssignale austauschbar, d.h. es können ebenso gut das erste oder zweite Positionssignal zum Prüfen und die jeweils übrigen Positionssignale zum Bestimmen der Position verwendet werden. In die Prüfung mittels des dritten Positionssignals können die das erste und/oder zweite Positionssignal einbezogen sein.

Die Steuer- und Auswertungseinheit ist bevorzugt dafür ausgebildet, die Positionssignale bei einem Zustandswechsel des dritten Positionssignals zu prüfen, insbesondere durch Vergleich mit einer Erwartung an die Zustände des ersten und zweiten Positionssignals während eines Flankenwechsels des dritten Positionssignals. Es gibt eine klare Erwartung, welche Zustände die beiden andern Positionssignale einer Änderung des Zustands im dritten Positionssignal einnehmen müssen, wenn die Gebervorrichtung intakt ist. Das dritte Positionssignal gibt sozusagen den Takt vor, in dem geprüft wird.

Die Steuer- und Auswertungseinheit ist bevorzugt dafür ausgebildet, die Positionssignale jeweils nach einer bestimmten Mindestpositionsänderung zu prüfen. Die Mindestpositionsänderung ist dabei so gewählt, insbesondere als Vielfaches beziehungsweise echter oder unechter Bruchteil einer Periode der Positionssignale, dass bei intakter Gebervorrichtung ein Zustandswechsel in bestimmte, vorab bekannte Zustände der Positionssignale erfolgen müsste. Beispielsweise wird die Mindestpositionsänderung als mindestens vier Zählinkremente einer durch Zähler bestimmten Position festgelegt. Dann wird beispielsweise geprüft, ob es den erwarteten Flankenwechsel im dritten Positionssignal gegeben hat, und allgemein ob der nach der Mindestpositionsänderung zu erwartende Zustand in einigen betrachteten oder allen Positionssignalen vorliegt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer Gebervorrichtung;
- Fig. 2: eine Darstellung beispielhafter erster, zweiter und dritter Positionssignale einer Gebervorrichtung sowie im unteren Teil ein Zählerverlauf für eine Positionsbestimmung aus den Positionssignalen;
- Fig. 3: eine Darstellung eines Zustandsautomaten zum Prüfen der drei Positionssignale; und
- Fig. 4: eine Darstellung ähnlich Figur 4, jedoch zusätzlich mit anhand des dritten Positionssignals festgelegten Zeitpunkten zum Prüfen der Positionssignale.

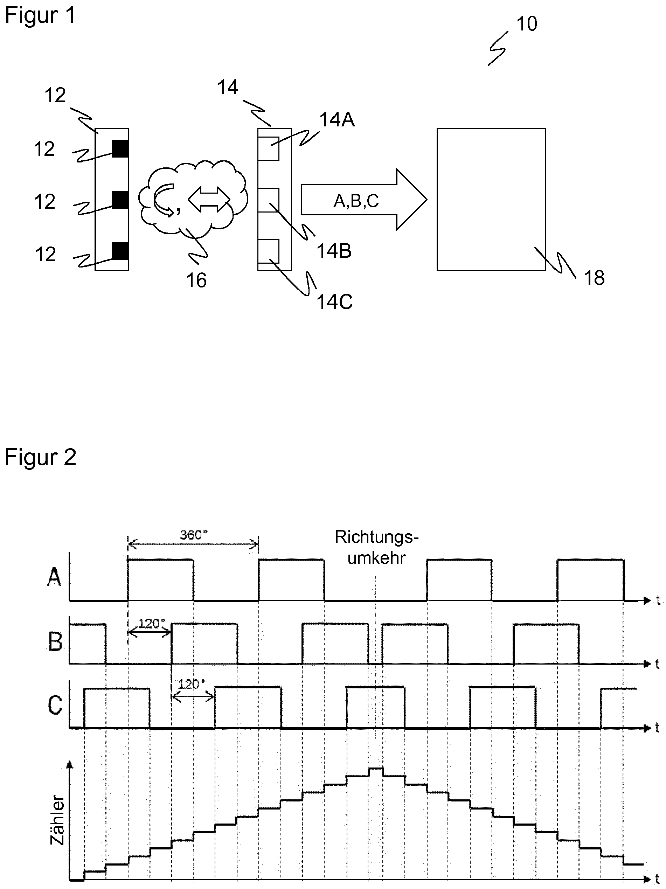

Figur 1 zeigt eine schematische Darstellung einer Gebervorrichtung 10. Eine Maßverkörperung 12 mit drei Codespuren 12A-C wird von einer Abtasteinheit 14 mit drei Abtastuntereinheiten 14A-C abgetastet. Die Maßverkörperung 12 ist mit einem ersten Objekt, die Abtasteinheit 14 mit einem zweiten Objekt verbunden, und die beiden Objekte und damit Maßverkörperung 12 und Abtasteinheit 14 befinden sich in einer ganz schematisch illustrierten Relativbewegung 16 zueinander.

Dabei kann die Gebervorrichtung 10 je nach Ausführungsform für eine lineare Bewegung oder eine Drehbewegung ausgebildet sein. Es kann sich folglich um ein lineares System oder ein rotatorisches System beziehungsweise einen (Winkel-)encoderoder Drehgeber handeln. Die Abtasteinheit 14 erzeugt drei Positionssignale, die mit A, B und C bezeichnet sind.

Die Erfindung lässt verschiedene Sensorprinzipien oder Möglichkeiten zu, wie die Maßverkörperung 12 und die Abtasteinheit 14 im Einzelnen ausgebildet sind. Beispielsweise kann die Maßverkörperung 12 eine Codescheibe oder eine Magnetanordnung sein. Die Abtasteinheit 14 arbeitet dementsprechend optisch im Auf- oder Durchlicht oder magnetisch, etwa als Lichttaster, Lichtschranke oder Hallsensor. Andere physikalische Messprinzipien mit entsprechenden Kombinationen von Maßverkörperung 12 und passender Abtasteinheit 14 sind ebenfalls denkbar. Die drei Positionssignale A, B, C können auch Signale sein, die ohnehin in dem System vorhanden sind, in dem die Gebervorrichtung 10 eingesetzt ist, beispielsweise die Signale von Hall-Sensoren, welche die Polung eines Permanentmageneten eines DC-Motors abtasten, und die für die Kommutierung des DC-Motors verwendet werden.

Eine Steuer- und Auswertungseinheit 18 wertet die drei Positionssignale A, B, C aus und bestimmt eine Position oder Positionsänderung der Maßverkörperung 12 gegenüber der Abtasteinheit 14 und damit zwischen den beiden Objekten. Außerdem prüft die Steuer- und Auswertungseinheit 18 die Positionssignale A, B, C zumindest teilweise, um Fehler aufzudecken. Die Gebervorrichtung 10 wird damit eine sichere Gebervorrichtung im einleitend genannten Sinne, erfüllt also insbesondere ein normiertes Sicherheitsniveau. Die gewonnene Position, ebenso wie ein etwaig aufgedeckter Fehler, werden dann vorzugsweise über eine sichere Schnittstelle wie einen sicheren Feldbus ausgegeben.

Die ursprünglichen Positionssignale A, B, C können noch analoge Signale sein, beispielsweise Sinussignale. Für die Überprüfung erfolgt dann vorzugsweise eine Digitalisierung oder Binarisierung in einem nicht gezeigten Digitalwandler. Alternativ sind die Positionssignale A, B, C von Anfang an Rechtecksignale. Analoge Positionssignale A, B, C können von der Steuer- und Auswertungseinheit 18 für eine feinere Bestimmung der Position genutzt werden. Die Überprüfung erfolgt aber vorzugsweise mit binären Positionssignalen, die also nur zwei logische Zustände Eins und Null aufweisen. Die elektrische Implementierung der beiden logischen Zustände kann beispielsweise durch je eine Signalleitung mit Bezug zu Masse oder auch durch je zwei Signalleitungen als Differenzsignal erfolgen.

Figur 2 zeigt im oberen Teil drei beispielhafte binäre Positionssignale A, B, C zu inkrementellen Codespuren 12A-C sowie im unteren Teil den Zustand eines Zählers, den die Steuer- und Auswertungseinheit 18 als eine mögliche Umsetzung der Bestimmung einer Position verwendet. Die drei Positionssignale A, B, C sind untereinander gleich mit einer identischen Periode, die hier mit 360° angenommen ist, und sie weisen zueinander einen Phasenversatz von 120° auf. Innerhalb eines Positionssignals alterniert der logische Zustand für jeweils 180° zwischen logisch Eins und Null. Dieser Verlauf entspricht einer gleichförmigen Bewegung oder Drehbewegung bei entsprechend ausgelegten Codespuren 12A-C.

Es wurde bereits erwähnt, dass die Codespuren 12A-C ursprünglich auch analoge, beispielsweise sinusförmige Signalformen erzeugen können. Die Sinusform wird dann optional für eine feinere Auflösung bei der Bestimmung der Position ausgenutzt. Für die hier betrachtete Überprüfung der Positionssignale A, B, C erfolgt für den genannten analogen Fall eine Digitalisierung, so dass sich auch dann eine Situation wie in Figur 2 ergibt.

Die drei Positionssignale wechseln abhängig von der Position in einer festen Reihenfolge ihre logischen Zustände. Diese Abfolge der Zustandswechsel kann für eine Plausibilisierung oder Überprüfung der Positionssignale A, B, C ausgenutzt werden, um damit potentielle Fehler in der Sensorik, Übertragung und Auswertung aufzudecken. Die jeweiligen kombinierten Zustände lassen sich als drei binäre Ziffern ausdrücken, wobei je eine Ziffer je Positionssignal A, B, C vorgesehen ist. Zwischen zwei Flankenwechseln, in Figur 2 durch gestrichelte senkrechte Linien gezeigt, liegt jeweils eine feste Kombination vor, die dann nach Flankenwechsel nur auf bestimmte zulässige Kombinationen wechseln kann. Die Steuer- und Auswertungseinheit 18 kennt das in Figur 2 erkennbare regelmäßigen Muster der Zustandskombinationen der Positionssignale A, B, C der Figur 2 bei intakter Gebervorrichtung 10 und prüft, ob eine zulässige Abfolge eingehalten wird.

Die Steuer- und Auswertungseinheit 18 zählt in einer Ausführungsform die Zustandswechsel, wie im unteren Teil der Figur 2 gezeigt. Jeder Zustandswechsel in einem der drei Positionssignale A, B, C bedeutet dabei eine Erhöhung oder Verminderung der Positionsinformation (counter). Die Zählrichtung wechselt mit der Bewegungsrichtung. Eine Richtungsumkehr kann die Steuer- und Auswertungseinheit 18 daran erkennen, dass sich die Abfolge der Zustandswechsel in den drei Positionssignalen A, B, C verändert. Deshalb wird in der rechten Hälfte der Figur 2 nach dem Richtungswechsel korrekt herab- statt wie zuvor heraufgezählt.

Beispielsweise mit jedem Flankenwechsel, somit jeder Veränderung des Zählerstandes, prüft die Steuer- und Auswertungseinheit 18, ob die neue Zustandskombination zulässig ist. Wie aus den Positionssignalen A, B, C der Figur 2 abzulesen, kann jeweils nur ein zweiter Eins-Zustand hinzukommen oder einer von zwei aktuellen Eins-Zuständen wegfallen. Wird die ja prinzipiell bekannte aktuelle Zähl- und damit Bewegungsrichtung einbezogen, so ist sogar klar, welcher Zustand von der Änderung betroffen sein muss. Damit hat die Steuer- und Auswertungseinheit 18 eine klare und eindeutige Erwartungshaltung, und durch Abweichungen davon wird ein Fehler aufgedeckt.

Alternativ zu einer Prüfung jeweils nach Flankenwechsel ist eine zyklische Prüfung insbesondere nach bestimmten Positionsschüben wie 120° oder 360° beziehungsweise einer bei der momentan gemessenen Geschwindigkeit erwarteten Dauer für das Zurücklegen eines solchen Positionsschubs denkbar. Dann prüft die Steuer- und Auswertungseinheit 18 erst einmal, ob überhaupt eine neue Zustandskombination vorliegt, und falls ja, ob diese zulässig ist.

Besondere Zustandskombinationen sind 000 und 111, dass also alle drei Positionssignale A, B, C zugleich den Zustand Null oder zugleich den Zustand Eins einnehmen. Ob letzterer Fall überhaupt auftreten kann, etwa durch Kurzschluss, hängt von der elektrischen Auslegung ab. Jedenfalls ist weder 000 noch 111 eine zulässige Zustandskombination und bei deren Erkennung ein Fehler aufgedeckt. Insbesondere lässt sich damit ein Kabelbruch erkennen: Sind die Eingangsstufen für jedes der drei Positionssignale A, B, C so ausgebildet, dass ein offener Eingang zu einem Low-Pegel und damit einer Null führt, so ergibt sich bei einem Kabelbruch die Zustandskombination 000.

In der bisherigen Erläuterung wurde nicht festgelegt, wie die Steuer- und Auswertungseinheit 18 ihre Erwartungshaltung an die Positionssignale A, B, C speichert oder bestimmt. Denkbar sind gespeicherte zulässige Abfolgen, aber auch das Überprüfen der Einhaltung der zu Figur 2 erklärten Regeln.

Figur 3 zeigt einen Zustandsautomaten als bevorzugte Ausführungsform zur Sequenzüberwachung aller drei Positionssignale A, B, C. Dabei kann der Zustandsautomat als solcher implementiert sein. Ebenso können einzelne Regeln aus dem Zustandsautomaten gelesen und als solche Regeln in der Steuer- und Auswertungseinheit 18 umgesetzt werden.

Der gezeigte Zustandsautomat ist am einfachsten im Zusammenhang mit einer Betrachtung des oberen Teils der Figur 2 verständlich. Es gibt insgesamt sechs zulässige Automatenzustände und einen Fehlerzustand. Dabei bedeutet ein zulässiger Automatenzustand, dass die Überprüfung der drei Positionssignale A, B, C keinen Fehler aufgedeckt hat, während der Fehlerzustand anzeigt, dass die Steuer- und Auswertungseinheit 18 die Gebervorrichtung als nicht mehr fehlerfrei funktionsfähig ansieht.

Die sechs zulässigen Automatenzustände weisen jeweils ein Positionssignal im Eins-Zustand und zwei Positionssignale im Null-Zustand auf oder umgekehrt. Ein Übergang zwischen den Automatenzuständen wird durch einen Flankenwechsel in einem der drei Positionssignale A, B, C ausgelöst. Zulässig kann ein solcher Übergang nur sein, wenn von einem Automatenzustand mit genau einem Positionssignal im Eins-Zustand in einen Automatenzustand mit zwei Positionssignalen im Eins-Zustand gewechselt wird oder umgekehrt. Außerdem darf nur genau ein Positionssignal seinen Zustand wechseln, nämlich einer von zwei Eins-Zuständen auf den Null-Zustand oder einer von zwei Null-Zuständen auf den Eins-Zustand. Das ergibt in Figur 3 den Ring aus sechs zulässigen Automatenzuständen (...011-)001-101-100-110-010-011-(001...), wo jeweils zulässige Übergänge nur zum nächsten Nachbarn erfolgen, und zwar je nach Bewegungsrichtung nur im Uhrzeigersinn oder nur gegen den Uhrzeigersinn. Alle anderen Übergänge führen in den in der Mitte des Rings dargestellten Fehlerzustand.

Es ist denkbar, nur einen Teil der Übergänge zu prüfen, insbesondere den in Figur 3 gezeigten Zustandsautomaten nur teilweise in der Steuer- und Auswertungseinheit 18 abzubilden. Insbesondere werden nicht unbedingt alle Übergangsbedingungen zum Fehlerzustand überprüft, entweder generell nicht oder durch Stichproben, bei denen pro Plausibilitätsprüfungen nur ein Teil geprüft wird.

Figur 4 ist eine Darstellung ähnlich Figur 2 zur weiteren Erläuterung von Ausführungsformen, bei denen die Plausibilitätsprüfung nicht wie in Figur 3 vollständig ist. Denkbar ist beispielsweise, zwei der drei Positionssignale A, B, C als Zählsignale für die Bestimmung der Position und das dritte Positionssignal zur Plausibilisierung zu verwenden. Die Positionsbestimmung entspricht dann grundsätzlich dem Messprinzip einer herkömmlichen Gebervorrichtung mit nur zwei Spuren. Zwar wären herkömmlich die beiden Spuren um 90° und nicht wie hier bevorzugt um 120° phasenversetzt, aber auch mit dem veränderten Phasenversatz von 120° und einer weiten Spanne eines anders variierten Phasenversatzes ist das Zählen genauso möglich, sofern nur ein Mindestabstand der Zustandswechsel gewährleistet ist.

Im Beispiel der Figur 4 wird der Zähler von den Positionssignalen A, B angesteuert und das Positionssignal C zur Plausibilisierung verwendet. Die Überprüfung erfolgt beispielsweise jeweils bei einer steigenden oder auch fallenden Flanke des Positionssignals C. Das kann durch diese Flanke getriggert sein, oder es wird zyklisch mit einer Prüfperiode geprüft, innerhalb derer mindestens eine solche Flanke auftreten müsste. Es wird dann der Zustand der beiden für das Zählen und damit die Bestimmung der Position verwendeten Positionssignale A, B geprüft, wofür es im Zeitpunkt der Flanke des Positionssignals C eine klare Erwartung gibt, die unmittelbar aus Figur 4 abgelesen werden kann: bei steigender Flanke des Positionssignals C muss das Positionssignal A auf Null und das Positionssignal B auf Eins stehen, bei fallender Flanke des Positionssignals C muss entsprechend das Positionssignal A auf Eins und das Positionssignal B auf Null stehen. Alternativ kann das letzte Bit des Zählerstandes geprüft werden, denn wenn bei einer steigenden Flanke des Positionssignals C ein gerader Zählerstand vorlag, muss das immer so sein, entsprechende Bedingungen gelten mit ungeradem Zählerstand beziehungsweise bei fallender Flanke des Positionssignals C.

Wenn nicht die Flanke im Positionssignal C selbst die Überprüfung auslöst, dann ist auch möglich, eine Prüfperiode zu definieren, wie zur Illustration in Figur 4 unten eingezeichnet, innerhalb derer ein solcher Flankenwechsel im Positionssignal C auftreten müsste. So wird beispielsweise nach vier oder mehr Zählinkrementen erwartet, dass mindestens eine Flanke im Positionssignal C aufgetreten ist.

## Patentansprüche

1. Gebervorrichtung (10) zur Bestimmung einer Position eines ersten Objekts relativ zu einem gegenüber dem ersten Objekt beweglichen zweiten Objekt, die eine mit dem ersten Objekt verbundene Maßverkörperung (12) und eine mit dem zweiten Objekt verbundene Abtasteinheit (14) zur Erzeugung eines ersten, zweiten und dritten Positionssignals (A, B, C) mit gegenseitigem Phasenversatz sowie eine Steuer- und Auswertungseinheit (18) aufweist, die dafür ausgebildet ist, die Position aus den Positionssignalen (A, B, C) zu bestimmen,
**dadurch gekennzeichnet,**
**dass** die Gebervorrichtung (10) sicher ausgebildet ist, indem die Steuer- und Auswertungseinheit (18) die Positionssignale (A, B, C) prüft.

2. Gebervorrichtung (10) nach Anspruch 1,
wobei die Maßverkörperung (12) drei periodische Codespuren (12A-C) mit gegenseitigem Phasenversatz von 120° aufweist.

3. Gebervorrichtung (10) nach Anspruch 1 oder 2,
wobei die Positionssignale (A, B, C) binäre Signale mit zwei Zuständen sind oder wobei mindestens eine Wandlereinheit vorgesehen ist, um für die Prüfung der Positionssignale (A, B, C) binäre Signale mit zwei Zuständen zu erzeugen.

4. Gebervorrichtung (10) nach Anspruch 3,
wobei die Steuer- und Auswertungseinheit (18) dafür ausgebildet ist, die Position (A, B, C) durch Zählen von Zustandswechseln der binären Signale zu bestimmen.

5. Gebervorrichtung (10) nach Anspruch 3 oder 4,
wobei die Abtasteinheit (14) dafür ausgebildet ist, einen bei einer eigenen Prüfung der Positionssignale (A, B, C) erkannten Fehler der Steuer- und Auswertungseinheit (18) durch einen dritten Zustand anzuzeigen.

6. Gebervorrichtung (10) nach einem der Ansprüche 3 bis 5,
wobei die Steuer- und Auswertungseinheit (18) dafür ausgebildet ist, bei der Prüfung der Positionssignale (A, B, C) einen Fehler zu erkennen, wenn die drei Positionssignale (A, B, C) zeitgleich denselben Zustand aufweisen.

7. Gebervorrichtung (10) nach einem der Ansprüche 3 bis 6,
wobei die Steuer- und Auswertungseinheit (18) dafür ausgebildet ist, für die Prüfung der Positionssignale (A, B, C) eine Abfolge der von den drei Positionssignalen (A, B, C) eingenommenen Zustände mit einer zulässigen Abfolge zu vergleichen.

8. Gebervorrichtung (10) nach einem der Ansprüche 3 bis 7,
wobei die Steuer- und Auswertungseinheit (18) die Abfolge mittels eines Zustandsautomaten vergleicht, wobei die Automatenzustände durch drei binäre Ziffern entsprechend den Zuständen der drei Positionssignale (A, B, C) gebildet sind.

9. Gebervorrichtung (10) nach Anspruch 8,
wobei der Zustandsautomat zulässige Automatenzustände, die jeweils genaue eine Eins oder zwei Einsen als binäre Ziffern aufweisen, sowie einen Fehlerzustand aufweist.

10. Gebervorrichtung (10) nach Anspruch 9,
wobei der Zustandsautomat von einem zulässigen Automatenzustand in einen zulässigen Automatenzustand übergeht, wenn der Automatenzustand zuerst genau eine Eins und dann zwei Einsen als binäre Ziffer aufweist oder umgekehrt, wobei eine der Einsen erhalten bleibt, und wobei insbesondere jeder andere Übergang eines Automatenzustands in den Fehlerzustand führt.

11. Gebervorrichtung (10) nach einem der Ansprüche 3 bis 10,
wobei die Steuer- und Auswertungseinheit (18) dafür ausgebildet ist, nur einen Teil der Zustandsübergänge zu prüfen.

12. Gebervorrichtung (10) nach einem der vorhergehenden Ansprüche,
wobei die Steuer- und Auswertungseinheit (18) dafür ausgebildet ist, die Position aus zwei der Positionssignale (A, B) zu bestimmen und das dritte Positionssignal (C) zum Prüfen der Positionssignale (A, B, C) zu verwenden.

13. Gebervorrichtung (109 nach Anspruch 12,
wobei die Steuer- und Auswertungseinheit (18) dafür ausgebildet ist, die Positionssignale (A, B, C) bei einem Zustandswechsel des dritten Positionssignals (C) zu prüfen, insbesondere durch Vergleich mit einer Erwartung an die Zustände des ersten und zweiten Positionssignals (A, B) während eines Flankenwechsels des dritten Positionssignals (C).

14. Gebervorrichtung (10) nach einem der vorhergehenden Ansprüche,
wobei die Steuer- und Auswertungseinheit (18) dafür ausgebildet ist, die Positionssignale (A, B, C) jeweils nach einer bestimmten Mindestpositionsänderung zu prüfen.

15. Verfahren zur Bestimmung einer Position eines ersten Objekts relativ zu einem gegenüber dem ersten Objekt beweglichen zweiten Objekt, wobei eine mit dem ersten Objekt verbundene Maßverkörperung (12) von einer mit dem zweiten Objektverbundenen Abtasteinheit (14) erfasst, dadurch ein erstes, zweites und drittes Positionssignals (A, B, C) mit gegenseitigem Phasenversatz erzeugt und aus den Positionssignalen (A, B, C) die Position bestimmt wird,
**dadurch gekennzeichnet,**
**dass** die Positionssignale (A, B, C) geprüft werden, um Fehler bei der Bestimmung der Position aufzudecken.
